# FASCICULE DE BREVET EUROPEEN

(11) **EP 1 268 095 B1**
(45) Date de publication et mention de la délivrance du brevet: **17.09.2003**
(21) Numéro de dépôt: 01921430.3
(22) Date de dépôt: 27.03.2001
(51) Int. Cl.: B09C 1/02, B09C 1/08, C02F 9/02, C02F 9/04

(54) **PROCEDE DE DEPOLLUTION DE SOLS POLLUES PAR DES HYDROCARBURES**
VERFAHREN ZUR REINIGUNG VON MIT KOHLENWASSERSTOFFEN VERSEUCHTEN BÖDEN
METHOD FOR DEPOLLUTION OF SOILS POLLUTED BY HYDROCARBONS

(30) Priorité: 30.03.2000 FR 0004067
(43) Date de publication de la demande: 02.01.2003
(73) Titulaire: Stengel, Patrice, 06140 Vence (FR)
(72) Inventeur: Stengel, Patrice, 06140 Vence (FR)
(74) Mandataire: Domange, Maxime
(86) Numéro de dépôt international: FR0100920
(87) Numéro de publication internationale: WO01074505

(56) Documents cités:
- WO-A-96/30134
- WO-A-98/37991
- GB-A- 1 310 108
- GB-A- 2 010 798
- US-A- 5 423 340
- PATENT ABSTRACTS OF JAPAN vol. 1998, no. 03, 27 février 1998 (1998-02-27) & JP 09 299924 A (CHEM GROUTING CO LTD;KAJIMA CORP; NIPPON PEROXIDE CO LTD), 25 novembre 1997 (1997-11-25)
- PATENT ABSTRACTS OF JAPAN vol. 1997, no. 05, 30 mai 1997 (1997-05-30) & JP 09 000611 A (SERAMIKIYUU:KK), 7 janvier 1997 (1997-01-07)

## Description

La présente invention concerne un procédé de traitement de dépollution de sols souillés par des hydrocarbures. Plus particulièrement, la présente invention concerne un procédé de traitement de sol constitué de matériaux principalement à base de sable et/ou de terre, souillés par des hydrocarbures. La présente invention a plus particulièrement pour objet un procédé de dépollution de sable ou de terre souillés par des hydrocarbures lourds provenant de cargaisons pétrolières ou d'accidents industriels.

Dans la présente invention, on entend par « matériaux souillés par des hydrocarbures un matériau solide friable de sol, principalement constitué de sable et/ou de terre, contenant des mélanges d'hydrocarbures d'origine minérale ou de synthèse, en particulier des hydrocarbures provenant de pétrole brut ou de distillat de pétrole brut raffiné. Plus particulièrement encore, il s'agit d'un mélange d'hydrocarbures d'origine minérale ou de synthèse destinés à la production de chaleur dans des installations de combustion tels que des fuels lourds selon les nomenclatures française et internationale des produits pétroliers.

La contamination des plages par les rejets des hydrocarbures, suite à des accidents de transport des cargaisons pétrolières ou au dégazage en pleine mer des pétroliers, sont des phénomènes de plus en plus fréquents. Les contraintes environnementales imposent que suite à une pollution accidentelle, il soit procédé le plus rapidement et le plus efficacement possible au nettoyage des sols contaminés. Jusqu'à présent, on procédait à un simple criblage du sable, qui éliminait uniquement les polluants d'une certaine taille. Les opérations de nettoyage des plages effectuées s'avéraient insuffisantes quant à la qualité du sable après nettoyage.

D'autres pollutions d'hydrocarbure peuvent être d'origine terrestre. Ainsi, on recense un nombre très important de sites pollués, soit par des fuites dans des bacs de stockage ou dans des conduites d'acheminement tels que des pipe line ou encore dans des installations industrielles.

Une des solutions mises en oeuvre jusqu'à ces dernières années consistait à laisser les hydrocarbures se dégrader au contact de la mer et du soleil. Une autre solution consistait au déblaiement des sables contaminés, suivi d'un stockage ou d'une incinération. Ces solutions ne sont pas satisfaisantes au regard des obligations de ne mettre en décharge que des déchets ultimes, non revalorisables.

D'autres solutions ont été utilisées plus récemment, mettant en oeuvre des solvants ou des absorbants divers. Ces solutions sont délicates et coûteuses à mettre en oeuvre et présentent des risques de migration des solvants dans l'environnement, ou imposent l'incinération pour le traitement final des absorbants.

On connaît dans WO 98/37991 des procédés mettant en oeuvre des agents chimiques oxydants pour réaliser une réaction d'oxydation radicalaire conduisant à l'oxydation des hydrocarbures. Toutefois, ce type de réaction d'oxydation implique des conditions de mise en oeuvre en milieu acide et à température élevée (de 70 à 90°C) dans une série de réacteurs clos, la circulation des produits et des réactifs étant assurée par des pompes. En particulier, les hydroxyles radicalaires formés par le mécanisme chimique d'oxydation radicalaire sont évacués par des installations dédiées. Ces installations ne sont pas transportables et ne peuvent pas être mises en place aisément sur les sites pollués ou à proximité de ceux-ci, où se trouvent les sols pollués à traiter. Par ailleurs, compte tenu des conditions de mise en oeuvre et des installations requises, les coûts de traitement sont élevés. Enfin, l'efficacité de traitement, les meilleurs résultats obtenus à 85°C portés dans ce brevet, ne permettent pas d'éliminer plus de 78,6 % des hydrocarbures.

Par ailleurs, on a décrit dans les brevets GB 2 010 798 et EP 071 50 751 des procédés dans lesquels on traite des boues d'effluents ou du sable contaminé(s) par des germes infectieux à l'aide d'eau oxygénée à des fins bactéricides pour désodoriser et/ou désinfecter les boues et sables traités, compte tenu des propriétés bactéricides de l'eau oxygénée.

Le but de la présente invention est de fournir un procédé permettant d'améliorer l'efficacité de la dépollution des sols pollués par des hydrocarbures lourds, sans présenter les inconvénients des procédés antérieurs. En particulier, un but de la présente invention est de pouvoir débarrasser complètement les sols des hydrocarbures polluants.

Un autre but de la présente invention est de pouvoir récupérer les hydrocarbures après dépollution.

Un autre but de la présente invention est de fournir un procédé qui peut être mis en oeuvre à l'aide d'une installation qui peut être transportée et mise en place aisément sur les sites ou à proximité des sites où sont localisés les sols pollués à traiter.

Un autre but de la présente invention est de fournir un procédé ne mettant en oeuvre aucun agent chimique laissant des traces dans les sables, les hydrocarbures, ainsi que dans l'eau de traitement.

Un autre but de la présente invention est de fournir un procédé en conformité avec les réglementations environnementales relatives aux déchets industriels et au traitement des effluents aqueux.

Pour ce faire, la présente invention fournit un procédé de traitement de dépollution de sol constitué de matériau principalement à base de sable et/ou de terre, souillé par des hydrocarbures, caractérisé en ce qu'on mélange, de préférence à température ambiante, ledit matériau souillé avec une solution d'eau oxygénée jusqu'à obtenir un dégagement gazeux et la séparation desdits hydrocarbures par flottation.

On entend par « eau oxygénée » le composé de formule H₂O₂ aussi dénommé peroxyde d'hydrogène.

Par mélange de l'eau oxygénée avec le matériau souillé, on observe un effet de moussage et/ou barbotage lié à la dégradation du peroxyde d'hydrogène selon un mécanisme connu de dismutation qui produit un dégagement d'oxygène (H₂O₂ → H₂O + 1/2 O₂). Selon la présente invention, on a en effet découvert que le dégagement d'oxygène se faisant au sein dudit matériau souillé a un effet de décrochage provoquant la séparation physique des hydrocarbures et des particules de matériau souillé, se trouvent ainsi débarrassées des hydrocarbures par flottation desdits hydrocarbures en surface.

On comprend que les quantité et concentration de la solution d'eau oxygénée à mettre en oeuvre dans le procédé dépendent du degré de pollution du matériau traité.

On peut récupérer ledit matériau de sol, tel que sable et/ou terre propres, c'est à dire séparés desdits hydrocarbures polluants au fond d'un récipient de mélange, et on peut éliminer lesdits hydrocarbures surnageant en surface par écrémage, comme explicité ci-après.

Les analyses ont montré que les sols traités ne présentaient pas de traces contaminantes de l'eau oxygénée employée. De même, les hydrocarbures obtenus après séparation et dépollution ne demandent pas une opération supplémentaire de décontamination liée à l'eau oxygénée employée. Cette non contamination par l'eau oxygénée est liée à son instabilité et durée de vie courte, celle-ci se dégradant très rapidement en oxygène. Un avantage important du procédé est qu'il ne nécessite l'utilisation d'aucun absorbant ou activateur autre que l'eau oxygénée, et il est mis en oeuvre à température ambiante.

Compte tenu de la propriété bactéricide de l'eau oxygénée, le traitement ainsi opéré a également pour effet de désinfecter lesdits matériaux souillés, c'est à dire de réduire le taux de germes bactériens infectieux. Toutefois, du fait que l'eau oxygénée ne laisse aucune trace dans les sables ou hydrocarbures ainsi que dans l'eau de traitement, des mesures ont montré que des sables contenant des germes infectieux désinfectés par ce procédé peuvent ensuite accueillir sans préjudice les micro organismes vivants de l'écosystème qui peut ainsi se reconstituer.

Dans un mode de réalisation avantageux, ladite solution d'eau oxygénée est une solution aqueuse d'eau oxygénée comprenant de préférence de 30 à 35 % en volume de peroxyde d'hydrogène.

Des solutions aqueuses d'eau oxygénée contenant 30 à 35 % en volume de peroxyde d'hydrogène sont disponibles dans le commerce et se caractérisent par des dégagements de respectivement 110 à 130 d'oxygène pour 1 l de solution d'eau oxygénée. On évite d'utiliser des solutions d'eau oxygénée contenant des concentrations supérieures de peroxyde d'hydrogène compte tenu de son pouvoir oxydant trop élevé, qui risquerait d'endommager les installations de mise en oeuvre du procédé.

Dans un mode préféré de réalisation, on réalise les étapes successives suivantes dans lesquelles :
1/ On mélange ledit matériau souillé par des hydrocarbures avec une solution d'eau oxygénée, et
2/ On verse le mélange obtenu à l'étape 1/ dans un récipient contenant une solution aqueuse jusqu'à obtenir la séparation des hydrocarbures par flottation, ledit matériau propre étant décanté au fond du récipient.

En effet, la décantation dans une solution aqueuse permet une séparation plus efficace et plus rapide desdits hydrocarbures surnageant. Ainsi, on peut provoquer la flottation, c'est à dire la remontée desdits hydrocarbures surnageant en surface, tout en mettant en oeuvre des quantités réduites d'eau oxygénée.

Plus particulièrement, à l'étape 1/, on mélange ledit matériau souillé par des hydrocarbures, avec une solution d'eau oxygénée dans un rapport volumique de 5 à 25 %, de préférence 10 à 20 % en volume de ladite solution d'eau oxygénée par rapport au volume dédit matériau souillé.

Plus particulièrement à l'étape 2/, on utilise une solution aqueuse dans un rapport volumique de 50 à 100 % en volume de solution aqueuse par rapport au volume du mélange obtenu à l'étape 1/.

Dans un mode préféré de réalisation, à l'étape 2/, on laisse décanter ledit mélange obtenu à l'étape 1/ dans un récipient contenant une solution aqueuse contenant une faible quantité d'eau oxygénée, de préférence 5 à 15 % en volume d'une solution d'eau oxygénée par rapport au volume total de la solution, ladite solution d'eau oxygénée contenant de préférence 30 à 35 % en volume de peroxyde d'hydrogène.

Ce mode de réalisation est préféré, car il permet d'améliorer encore l'efficacité du procédé en évitant que le peroxyde d'hydrogène de ladite solution d'eau oxygénée mis en oeuvre à l'étape 1/ ci-dessus ne se dilue dans la solution aqueuse de décantation. Et il permet donc de limiter la quantité d'eau oxygénée à mettre en oeuvre dans le procédé, tout en conservant une quantité importante d'eau favorable à la flottation.

L'inventeur a observé que pour obtenir une réaction de décrochage efficace des hydrocarbures, la viscosité desdits matériaux souillés est telle que ledit matériau souillé soit suffisamment pâteux, mais pas trop épais, et de préférence sa viscosité cinématique doit être comprise entre 300 et 700 cSt, de préférence encore de 400 à 500 cSt à 50°C. Pour ce faire, selon une caractéristique avantageuse du procédé selon l'invention, avant l'étape de mélange 1/, on réalise une étape de fluidification dudit mélange souillé par des hydrocarbures, fluidification par broyage et/ou par mélange avec un solvant, de préférence pour obtenir un mélange pâteux présentant une viscosité cinématique d'environ 300 à 700 cSt (centi stoke), de préférence encore de 400 à 500 cSt (centi stoke) à 50°C.

Plus particulièrement, dans un mode de réalisation avantageux, on réalise ladite étape de fluidification dudit matériau souillé par les hydrocarbure, par mélange avec un hydrocarbure de viscosité inférieure à celle des hydrocarbures polluants contenus dans ledit matériau souillé, de préférence un hydrocarbure liquide léger du type gasoil.

On entend ici par « gasoil » un mélange d'hydrocarbure provenant de la distillation de pétrole qui a un point d'ébullition de 150 à 350°C (selon le terme anglais « distillated fuel »). L'utilisation d'hydrocarbure léger à titre de solvant présente l'avantage supplémentaire de ne pas engendrer une pollution éventuelle par leur solvant organique polluant.

Comme mentionné précédemment, pour favoriser la réaction de dismutation, dans un mode préféré de réalisation, à l'étape 1/ de mélange dudit matériau souillé avec une solution aqueuse d'eau oxygénée, on opère à température ambiante et en milieu neutre ou basique, de préférence à pH supérieur à 9, de préférence encore en présence d'un catalyseur de dismutation tel que du fer.

Le procédé selon l'invention décrit ci-après comporte plus particulièrement les étapes successives dans lesquelles :
1a/ On fluidifie, si nécessaire, lesdits matériaux souillés par des hydrocarbures lourds, par mélange de préférence par malaxage vigoureux d'un solvant de préférence un hydrocarbure liquide léger, et
1b/ On mélange ledit matériau souillé éventuellement fluidifié obtenu à l'étape 1/, avec unedite solution d'eau oxygénée, et de préférence on réalise un malaxage vigoureux du mélange dudit matériau souillé et de ladite solution d'eau oxygénée et éventuellement dudit solvant, de manière à obtenir un mélange bien homogénéisé, et
2/ On réalise une décantation du mélange obtenu à l'étape 2/ dans un bac contenant de l'eau et une faible quantité d'eau oxygénée, et
3/ On récupère ledit matériau propre débarrassé desdits hydrocarbures lourds polluants au fond du bac et lesdits hydrocarbures polluants surnageant par écrémage, et
4/ De préférence, on sépare les particules fines de sédiment, et l'eau encore en mélange avec lesdits hydrocarbures lourds polluants du surnageant écrémé à l'étape 3/.

Le nouveau procédé selon la présente invention présente en outre l'avantage de pouvoir être mis en oeuvre à l'aide d'une installation transportable et de mise en place aisée sur les sites pollués ou à proximité de ceux-ci, comme il sera explicité ci-après.

Avantageusement, ledit matériau souillé est du sable de plage pollué par des hydrocarbures lourds.

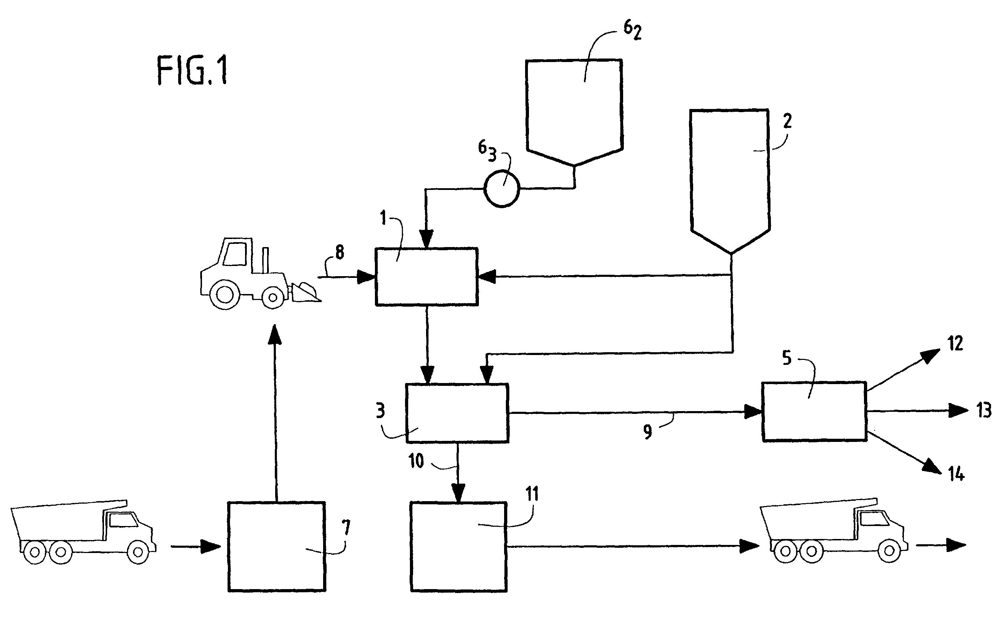

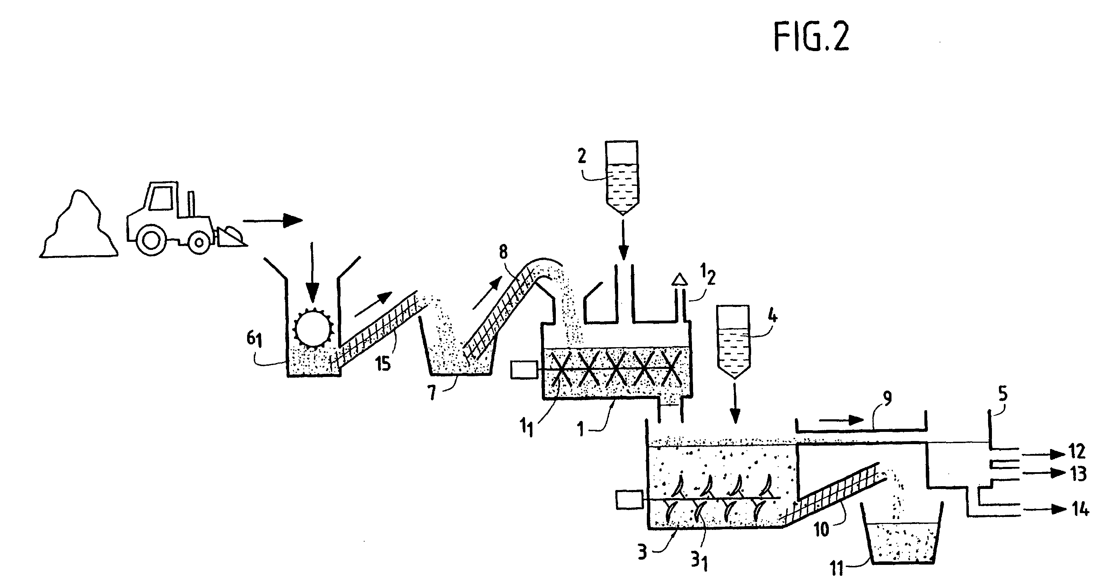

D'autres caractéristiques et avantages du procédé selon l'invention apparaîtront à la lumière des exemples de réalisation qui vont suivre, faits en référence aux figures 1 et 2, dans lesquelles :
- Sur la figure 1, on a représenté une installation industrielle permettant la mise en oeuvre du procédé avec une étape de fluidification par un solvant.
- Sur la figure 2, on a représenté une installation de mise en oeuvre d'un procédé selon l'invention comprenant un dispositif de concassage de la matière solide contaminée et sans dispositif de fluidification à l'aide d'un solvant.

### EXEMPLE 1 : PROTOCOLE OPERATOIRE

On décrit tout d'abord ci-après un exemple de réalisation d'un protocole opératoire qui illustre les proportions respectives des différents réactifs mis en oeuvre.

On a utilisé un sable naturel de plage souillé par un hydrocarbure du type « fuel lourd » ayant séjourné en mer avant d'être rejeté sur la plage. La teneur en hydrocarbure analysée en laboratoire a donné une valeur de 32 % en poids d'hydrocarbure.

Dans un récipient, on a versé 0,5 litre de sable souillé par des hydrocarbures. On y a rajouté 100 ml d'eau oxygénée d'une solution du commerce à 110 volumes (30 % en volume de peroxyde d'hydrogène) mesurée à l'éprouvette. On a mélangé le tout pendant une minute avec un mélangeur. Puis on a versé le mélange obtenu dans un récipient de 2 litres. On a rajouté ensuite 1 litre d'eau et 100 ml d'eau oxygénée d'une solution du commerce à 110 volumes dans le bocal. On a fermé le bocal. On agite vigoureusement pendant 30 secondes. Après décantation du sable, on évacue la phase d'hydrocarbure à l'aide d'une spatule. On verse ensuite le sable dans un deuxième bocal de 2 litres et on fait un autre lavage avec de l'eau. Ainsi, après décantation, on recueille le sable et on le sèche avec tous moyens adaptés.

La teneur en hydrocarbure du sable séché, qui est inférieure à 0,01 % en poids confirme que le protocole opératoire est un procédé très efficace de dépollution de sable souillé par des hydrocarbures. Un essai effectué sur des terres polluées dans mêmes conditions a donné des résultats similaires.

Si les hydrocarbures sont très pâteux, il faut procéder préalablement à une fluidification par du gasoil. Sur l'exemple précédent, au 0,5 l de sable souillé par des hydrocarbures, on rajoute 5 % en volume de gasoil, c'est à dire 25 ml de gasoil. On malaxe vigoureusement le mélange avec l'hydrocarbure quelques minutes, jusqu'à obtenir une pâte ayant une consistance facile à travailler.

### EXEMPLE 2 : INSTALLATIONS DE TRAITEMENT

Sur les figures 1 et 2, on utilise une installation transportable et pouvant être mise en place sur un site pollué ou à proximité, comprenant d'amont en aval :
a) Un premier mélangeur 1 comprenant une enceinte fermée et des moyens de malaxage,
b) Un bac de stockage 2 d'unedite solution d'eau oxygénée qui alimente ledit premier mélangeur 1, et éventuellement le séparateur/décanteur 3 visé ci-dessus,
c) un séparateur/décanteur 3 comprenant une cuve ouverte, et
d) de préférence un deuxième bac de stockage 4 d'une solution aqueuse contenant une faible quantité d'eau oxygénée, qui alimente le séparateur/décanteur 3.

Sur la figure 1, ladite installation comprend en outre un bac de stockage 6₂ dudit solvant et de préférence une pompe doseuse 6₃ permettant d'alimenter ledit premier mélangeur en dit solvant.

Sur la figure 2, l'installation comprend en outre en amont un concasseur 6₁ permettant de broyer ledit matériau souillé, de préférence sous forme de particules de taille inférieure à 5 mm.

Sur les figures 1 et 2, ladite installation comprend en outre un décanteur à 3 voies 5 permettant de séparer les hydrocarbures polluants, l'eau et les particules fines résiduelles de sédiments provenant du surnageant, issu dudit séparateur/décanteur 3 .

En outre, sur la figure 2, ladite installation comprend avantageusement un moyen d'acheminement 8 comprenant une vis sans fin permettant d'acheminer ledit matériau souillé dans ledit premier mélangeur 1, et un deuxième moyen d'acheminement 10 comprenant une vis sans fin permettant d'acheminer ledit matériau souillé depuis le fond du bac séparateur/décanteur vers une trémie de stockage intermédiaire du matériau dépollué 11.

2.1. Sur la figure 1, les sables ou terres polluées sont acheminés dans un mélangeur 1 où ils sont mélangés à un solvant.

Les sédiments pollués sont déversés dans le mélangeur 1 constitué d'une enceinte fermée 1, de préférence à l'aide d'une vis sans fin 8, de préférence encore depuis une trémie de chargement 7 servant de stockage intermédiaire des sédiments pollués. L'enceinte fermée est avantageuse pour éviter les risques de projection liés à un brassage de l'eau oxygénée concentrée mise en oeuvre. Cette enceinte est cependant mise à la pression atmosphérique par un évent.

Ledit solvant est acheminé dans ledit mélangeur par une pompe doseuse 6₃ depuis un bac de stockage 6₂ puis mélangés à une solution d'eau oxygénée à 30 ou 35 % en volume stockée dans un bac de stockage 2. Le mélange ainsi obtenu est coulé dans un bac séparateur/décanteur 3, qui comprend de l'eau dans lequel on a rajouté une faible quantité de solution d'eau oxygénée depuis le bac de stockage 2. Dans le séparateur/décanteur 3 se produit une séparation des constituants du mélange. Les sables ou terres propres sont récupérés au fond du séparateur/décanteur 3 et sont évacués grâce à une vis sans fin 10 dans un bac ou une trémie de stockage 11. Le mélange surnageant dans le séparateur/décanteur 3 constitué d'eau, d'hydrocarbures et de sédiments fins, est acheminé par écrémage 9 dans un décanteur à trois voies 5 qui permet la séparation et l'évacuation des 3 phases consistant dans de l'eau du décanteur 12 des sédiments fins du décanteur 14 et des hydrocarbures décantés 13.

2.2. Dans l'installation décrite sur la figure 2, les sédiments pollués sont déversés dans un concasseur broyeur 6₁ puis acheminés à l'aide d'une vis sans fin 15 dans une trémie de stockage intermédiaire 7, puis les sédiments pollués sont acheminés à l'aide d'une seconde vis sans fin 8 dans un mélangeur 1 constitué d'une enceinte fermée dans laquelle on réalise un malaxage vigoureux 1₁. Ledit mélangeur 1 est alimenté en solution d'eau oxygénée à forte concentration (au moins 30 % en volume de peroxyde d'hydrogène) depuis un bac de stockage 2. Le mélange ainsi obtenu est ensuite déversé dans un bac séparateur/décanteur 3, qui est alimenté en une solution aqueuse contenant une faible quantité d'eau oxygénée stockée dans un bac de stockage 4. On récupère les sols ou terres propres dépollués au fond du bac séparateur/décanteur 3, un soc de charrue tournant 3₁ poussant les sédiments dépollués vers une vis sans fin 10. Le caractère ascendant de la vis sans fin 10 permet de refluer l'eau dans le bac 3. En haut de la vis sans fin 10, les sédiments dépollués sont recueillis dans une trémie de stockage 11. Le mélange d'hydrocarbure surnageant dans le bac 3 est acheminé 9 vers un décanteur à trois voies 5. Le mélangeur 1 constitué d'une enceinte fermée comprend un évent d'évacuation de l'oxygène.

Le mélangeur 1 est un mélangeur de type MINOX PSM 4000 ® équipé de la façon suivante :
- tambour malaxeur horizontal cylindrique,
- moteur électrique EXE3 : 75kW, 380 volts, triphasé,
- volume du tambour : 4000 litres (volume utile : environ 70 %).

Le séparateur/décanteur 3 est constitué d'un bassin en inox de 8m³ environ, équipé d'un dispositif de trop plein et retenue d'évacuation à chaîne tournante. Il comporte une vis de transport 3₁avec crible-classeur intégrée dans le bassin et une vis de drainage 10 des sols nettoyés.

Le décanteur à 3 voies 5 est constitué d'un dispositif dénommé TRICANTEUR de marque FLOTTWEG ® composé d'un tambour cylindrique équipé d'une vis sans fin avec des disques spéciaux de séparation, celui-ci permettant de séparer en continu les sédiments, l'eau et l'hydrocarbure sans altération de la nature de ce dernier.

L'acheminement du surnageant depuis le séparateur/décanteur 3 vers le décanteur à 3 voies 5 se fait grâce à un dispositif de vis sans fin flexible 9.

Une installation telle que décrite ci-dessus représente un empiétement au sol d'environ 100 m², elle est transportable dans deux conteneurs de 3m³ et permet la dépollution de 15 à 20 m³/h de sol pollué.

A titre illustratif, une installation pilote telle que décrite ci-dessus permet de traiter 490 litres de sédiments pollués dans undit premier mélangeur 1 de 600 litres, dans lequel on déverse 25 litres d'une solution d'eau oxygénée à 30 ou 35 % en volume de peroxyde d'hydrogène. On réalise un mélange par malaxage vigoureux durant 7 minutes, puis on déverse dans un bac décanteur séparateur 3 de 3m³ le mélange de sédiments pollués et d'eau oxygéné depuis le premier mélangeur 1. Le bac décanteur 3 contient une solution aqueuse de 300 litres obtenue à partir de 20 litres de solution d'eau oxygénée à 30 ou 35 % en peroxyde d'hydrogène. Ces 300 litres de solution aqueuse contenant une faible quantité d'eau oxygénée sont réactifs pendant 6 à 8 heures sans nécessiter un rechargement en solution d'eau oxygénée. Le temps de séjour dans le bac décanteur 3 est de 10 à 15 minutes.

## Revendications

1. Procédé de traitement de dépollution de sol constitué de matériaux principalement à base de sable et/ou de terre, souillés par des hydrocarbures, **caractérisé en ce qu'**on mélange, de préférence à température ambiante, ledit matériau souillé par des hydrocarbures avec une solution d'eau oxygénée jusqu'à obtenir un dégagement gazeux d'oxygène résultant de la dismutation de l'eau oxygénée provoquant la séparation desdits hydrocarbures par flottation..

2. Procédé selon la revendication 1, **caractérisé en ce que** ladite solution d'eau oxygénée est une solution aqueuse d'eau oxygénée comprenant de préférence de 30 à 35 % en volume de peroxyde d'hydrogène.

3. Procédé selon la revendication 1 ou 2, **caractérisé en ce qu'**on réalise les étapes successives suivantes, dans lesquelles :
1/ On mélange ledit matériau souillé par des hydrocarbures avec une solution d'eau oxygénée, et
2/ On verse le mélange obtenu à l'étape 1/ dans un récipient contenant une solution aqueuse jusqu'à obtenir la séparation des hydrocarbures par flottation, ledit matériau propre étant décanté au fond du récipient.

4. Procédé selon la revendication 3, **caractérisé en ce qu'**à l'étape 1/, on mélange ledit matériau souillé par des hydrocarbures, avec une solution d'eau oxygénée dans un rapport volumique de 5 à 25 %, de préférence 10 à 20 % en volume de ladite solution d'eau oxygénée par rapport au volume dédit matériau souillé.

5. Procédé selon l'une des revendications 3 ou 4, **caractérisé en ce qu'**à l'étape 2/, on laisse décanter ledit mélange obtenu à l'étape 1/ dans un récipient contenant une solution aqueuse contenant une faible quantité d'eau oxygénée, de préférence 5 à 10 % en volume d'une solution d'eau oxygénée par rapport au volume total de la solution, ladite solution d'eau oxygénée contenant de préférence 30 à 35 % en volume de peroxyde d'hydrogène.

6. Procédé selon l'une des revendications 1 à 5, **caractérisé en ce qu'**avant l'étape de mélange 1/, on réalise une étape de fluidification dudit matériau souillé par des hydrocarbures, cette fluidification se faisant par broyage et/ou par mélange avec un solvant, de préférence pour obtenir un mélange présentant une viscosité cinématique d'environ 300 à 700 cSt (centi stoke), de préférence encore de 400 à 500 cSt (centi stoke) à 50°C.

7. Procédé selon la revendication 6, **caractérisé en ce qu'**on réalise ladite étape de fluidification dudit matériau souillé par les hydrocarbure, par mélange avec un hydrocarbure de viscosité inférieure à celle des hydrocarbures polluants contenus dans ledit matériau souillé, de préférence un hydrocarbure liquide léger du type gasoil.

8. Procédé selon la revendication 7, **caractérisé en ce qu'**à l'étape 1/ de mélange dudit matériau souillé avec une solution aqueuse d'eau oxygénée, on opère à température ambiante et en milieu neutre ou basique, de préférence à pH supérieur à 9, de préférence encore en présence d'un catalyseur de dismutation tel que du fer.

9. Procédé selon l'une des revendications 1 à 8, **caractérisé en ce que** :
1a/ on fluidifie si nécessaire ledit matériau souillé par des hydrocarbures lourds, par mélange de préférence par malaxage vigoureux d'un solvant de préférence un hydrocarbure liquide léger, et
1b/ on mélange ledit matériau souillé éventuellement fluidifié obtenu à l'étape 1/, avec unedite solution d'eau oxygénée, et de préférence on réalise un malaxage vigoureux du mélange dudit matériau souillé et de ladite solution d'eau oxygénée et éventuellement dudit solvant, de manière à obtenir un mélange bien homogénéisé, et
2/ on réalise une décantation du mélange obtenu à l'étape 2/ dans un bac contenant de l'eau et une faible quantité d'eau oxygénée, et
3/ on récupère ledit matériau propre débarrassé desdits hydrocarbures lourds polluants au fond du bac et lesdits hydrocarbures polluants surnageant par écrémage, et
4/ de préférence, on sépare les particules fines de sédiment, et l'eau encore en mélange avec lesdits hydrocarbures lourds polluants du surnageant écrémé à l'étape 3/.

10. Procédé selon l'une des revendications précédentes, **caractérisé en ce qu'**on utilise une installation transportable et pouvant être mise en place sur un site pollué ou à proximité, comprenant d'amont en aval :
a) Un mélangeur (1) comprenant une enceinte fermée et des moyens de malaxage,
b) Un bac de stockage (2) d'unedite solution d'eau oxygénée qui alimente ledit premier mélangeur (1),
c) un séparateur/décanteur (3) comprenant une cuve ouverte, et
d) de préférence un deuxième bac de stockage (4) d'une solution aqueuse contenant une faible quantité d'eau oxygénée.

11. Procédé selon la revendication 10, **caractérisé en ce que** ladite installation comprend en outre un bac de stockage (6₂) dudit solvant et de préférence une pompe doseuse permettant d'alimenter ledit premier mélangeur en dit solvant.

12. Procédé selon la revendication 10, **caractérisé en ce que** ladite installation comprend en outre un décanteur à 3 voies 5 permettant de séparer les hydrocarbures polluants, l'eau et les particules fines résiduelles de sédiments provenant du surnageant issu dudit séparateur/décanteur (3) .

13. Procédé selon la revendication 10 ou 11, **caractérisé en ce que** l'installation comprend en outre en amont un concasseur (6₁) permettant de broyer ledit matériau souillé, de préférence sous forme de particules de taille inférieure à 5 mm.

14. Procédé selon l'une des revendications 10 à 13, **caractérisé en ce que** ladite installation comprend en outre un moyen d'acheminement (8) comprenant une vis sans fin permettant d'acheminer ledit matériau souillé dans ledit premier mélangeur (1), et un deuxième moyen d'acheminement (10) comprenant une vis sans fin permettant d'acheminer ledit matériau souillé depuis le fond du bac séparateur/décanteur (3) vers une trémie de stockage intermédiaire du matériau dépollué (11).

15. Procédé selon l'une des revendications précédentes, **caractérisé en ce que** ledit matériau souillé est du sable de plage pollué par des hydrocarbures lourds.

## Claims

1. A method of depollution treatment for soil made up of materials based mainly on sand and/or earth that have been contaminated with hydrocarbons, the method being **characterised in that** said hydrocarbon-contaminated material is mixed, preferably at ambient temperature, with a hydrogen peroxide solution so as to cause oxygen gases resulting from the disproportionation of the oxygenated water to be given off, causing said hydrocarbons to be separated by flotation.

2. A method according to claim 1, **characterised in that** said hydrogen peroxide solution is an aqueous solution of hydrogen peroxide preferably containing 30% to 35% by volume of hydrogen peroxide.

3. A method according to claim 1 or claim 2, **characterised in that** the following steps are performed in succession:
1) said hydrocarbon-contaminated material is mixed with a hydrogen peroxide solution; and
2) the mixture obtained in step 1) is poured into a receptacle containing an aqueous solution so as to separate hydrocarbons by flotation, said material in the clean state settling out into the bottom of the receptacle.

4. A method according to claim 3, **characterised in that** in step 1), said hydrocarbon-contaminated material is mixed with a hydrogen peroxide solution in a volume ratio of 5% to 25%, and preferably of 10% to 20% of said hydrogen peroxide solution relative to the volume of said contaminated material.

5. A method according to claim 3 or claim 4, **characterised in that** in step 2), said mixture obtained in step 1) is allowed to settle in a receptacle containing an aqueous solution containing a small quantity of hydrogen peroxide, preferably 5% to 10% by volume of a hydrogen peroxide solution relative to the total volume of the solution, said hydrogen peroxide solution preferably containing 30% to 35% by volume of hydrogen peroxide.

6. A method according to one of claims 1 to 5, **characterised in that** prior to mixing step 1), a fluidising step is performed in which said hydrocarbon-contaminated material is fluidised by crushing and/or mixing with a solvent, preferably in order to obtain a mixture presenting dynamic viscosity lying in the range approximately 300 cSt (centistokes) to 700 cSt and more preferably in the range 400 cSt to 500 cSt at 50°C.

7. A method according to claim 6, **characterised in that** said step of fluidising said hydrocarbon-contaminated material is performed by mixing with a hydrocarbon of viscosity that is lower than that of the polluting hydrocarbon contained in said contaminated material, preferably a light liquid hydrocarbon of the gasoil type.

8. A method according to claim 7, **characterised in that** in step 1) of mixing said contaminated material with a hydrogen peroxide solution, mixing takes place at ambient temperature in a medium that is neutral or basic, preferably having a pH greater than 9, and more preferably in the presence of a disproportionation catalyst such as iron.

9. A method according to one of claims 1 to 8, **characterised in that**:
1a) said material contaminated with heavy hydrocarbons is fluidised, where necessary, by being mixed, preferably by being vigorously blended with a solvent, preferably a light liquid hydrocarbon; and
1b) said optionally fluidised contaminated material obtained in step 1) is mixed with a said hydrogen peroxide solution, and the mixture of said contaminated material and said hydrogen peroxide solution possibly together with said solvent is preferably subjected to vigorous blending so as to obtain a thoroughly homogenized mixture; and
2) the mixture obtained in step 2) is allowed to settle in a tank containing water with a small quantity of hydrogen peroxide; and
3) said material when cleaned and separated from said polluting heavy hydrocarbons is recovered from the bottom of the tank and said polluting hydrocarbons are recovered from the surface by skimming; and
4) the fine particles of sediment and the water still mixed with said polluting heavy hydrocarbons skimmed from the surface in step 3) are preferably separated.

10. A method according to one of the preceding claims, **characterised in that** a transportable installation is used suitable for being set up on a polluted site or close thereto, the installation comprising from an upstream end to a downstream end:
a) a mixer (1) comprising a closed enclosure and blending means;
b) a storage tank (2) for storing a said hydrogen peroxide solution and feeding said first mixer (1);
c) a separator/settling tank (3) comprising an open vessel; and
d) preferably a second storage tank (4) for storing an aqueous solution containing a small quantity of hydrogen peroxide.

11. A method according to claim 10, **characterised in that** said installation further comprises a storage tank (6₂) for storing said solvent and preferably a metering pump enabling said first mixer to be fed with said solvent.

12. A method according to claim 10, **characterised in that** said installation further comprises a 3-port settling tank (5) for separating the polluting hydrocarbons, the water, and the residual fine particles of sediment skimmed from the surface of said separator/settling tank (3).

13. A method according to claim 10 or claim 11, **characterised in that** the installation further comprises, at its upstream end, a crusher (6₁) for crushing said contaminated material, preferably into the form of particles of size smaller than 5 mm.

14. A method according to one of claims 10 to 13, **characterised in that** said installation further comprises conveyor means (8) comprising an auger enabling said contaminated material to be conveyed into said first mixer (1), and second conveyor means (10) comprising an auger enabling said contaminated material to be conveyed from the bottom of the separator/settling tank (3) to an intermediate storage hopper for the depolluted material (11).

15. A method according to one of the preceding claims, **characterised in that** said contaminated material is beach sand polluted with heavy hydrocarbons.

## Patentansprüche

1. Verfahren zur Behandlung zur Bodenreinigung, wobei der Boden aus hauptsächlich auf der Basis von Sand und/oder Erde bestehenden Materialien zusammengesetzt ist, die durch Kohlenwasserstoffe verschmutzt sind, **dadurch gekennzeichnet, dass** man, bevorzugt bei Raumtemperatur, das durch die Kohlenwasserstoffe verschmutzte Material mit einer Lösung von wasserstoffperoxidhaltigem Wasser vermischt, bis eine gasförmige Sauerstoffentwicklung erhalten wird, die sich aus der Dismutation des wasserstoffperoxidhaltigen Wassers ergibt, welche die Abtrennung der Kohlenwasserstoffe durch Flotation auslöst.

2. Verfahren gemäß Anspruch 1, **dadurch gekennzeichnet, dass** die Lösung von wasserstoffperoxidhaltigem Wasser eine wässrige Lösung von wasserstoffperoxidhaltigem Wasser ist, die bevorzugt 30 bis 35 Volumen-% Wasserstoffperoxid enthält.

3. Verfahren gemäß einem der Ansprüche 1 oder 2, **dadurch gekennzeichnet, dass** die folgenden aufeinanderfolgenden Schritte durchgeführt werden, worin:
1) das durch Kohlenwasserstoffe verschmutzte Material mit einer Lösung von wasserstoffperoxidhaltigem Wasser vermischt wird, und
2) die in Schritt 1) erhaltene Mischung in einen Behälter eingeführt wird, welcher eine wässrige Lösung enthält, bis eine Abtrennung der Kohlenwasserstoffe durch Flotation erhalten wird, wobei das saubere Material auf dem Behälterboden dekantiert wird.

4. Verfahren gemäß Anspruch 3, **dadurch gekennzeichnet, dass** in Schritt 1) das durch Kohlenwasserstoffe verschmutzte Material mit einer Lösung von wasserstoffperoxidhaltigem Wasser in einem Volumenverhältnis von 5 bis 25 %, bevorzugt 10 bis 20 Volumen-% der Lösung von wasserstoffperoxidhaltigem Wasser, bezogen auf das Volumen des verschmutzten Materials, vermischt wird.

5. Verfahren gemäß einem der Ansprüche 3 oder 4, **dadurch gekennzeichnet, dass** man in Schritt 2) die in Schritt 1) erhaltene Mischung in einem Behälter dekantieren lässt, der eine wässrige Lösung enthält, welche eine niedrige Menge an wasserstoffperoxidhaltigem Wasser enthält, bevorzugt 5 bis 10 Volumen-% einer Lösung von wasserstoffperoxidhaltigem Wasser, bezogen auf das Gesamtvolumen der Lösung, wobei die Lösung von wasserstoffperoxidhaltigem Wasser bevorzugt 30 bis 35 Volumen-% Wasserstoffperoxid enthält.

6. Verfahren gemäß einem der Ansprüche 1 bis 5, **dadurch gekennzeichnet, dass** vor dem Misch-Schritt 1) ein Fluidisierungs-Schritt des durch Kohlenwasserstoffe verschmutzten Materials ausgeführt wird, wobei die Fluidisierung durch Zerkleinern und/oder durch Mischen mit einem Lösungsmittel vorgenommen wird, um bevorzugt eine Mischung zu erhalten, die ein Viskositäts-Dichteverhältnis von ungefähr 300 bis 700 cST (centi stoke) aufweist, noch bevorzugter von 400 bis 500 cST (centi stoke) bei 50°C.

7. Verfahren gemäß Anspruch 6, **dadurch gekennzeichnet, dass** der Fluidisierungs-Schritt des durch Kohlenwasserstoffe verschmutzten Materials durch Mischen mit einem Kohlenwasserstoff ausgeführt wird, der eine niedrigere Viskosität als jene der verschmutzenden Kohlenwasserstoffe, die in dem verschmutzten Material enthalten sind, aufweist, bevorzugt ein flüssiger Leichtkohlenwasserstoff vom Typ Gasöl.

8. Verfahren gemäß Anspruch 7, **dadurch gekennzeichnet, dass** in Schritt 1) des Mischens des verschmutzten Materials mit einer wässrigen Lösung von wasserstoffperoxidhaltigem Wasser bei Raumtemperatur und in neutralen oder basischen Medium, bevorzugt mit einem pH über 9, bevorzugt noch in Gegenwart eines Dismutationskatalysators wie Eisen, gearbeitet wird.

9. Verfahren gemäß einem der Ansprüche 1 bis 8, **dadurch gekennzeichnet**,
1a) dass, wenn erforderlich, das durch Schwerkohlenwasserstoffe verschmutzte Material durch Mischen fluidisiert wird, bevorzugt durch kräftiges Rühren eines Lösungsmittels, bevorzugt eines flüssigen Leichtkohlenwasserstoffes, und
1b) dass das gegebenenfalls fluidisierte, verschmutzte Material, das in Schritt 1) erhalten wird, mit einer Lösung von wasserstoffperoxidhaltigem Wasser vermischt wird, und bevorzugt wird ein kräftiges Rühren der Mischung des verschmutzten Materials und der Lösung von wasserstoffperoxidhaltigem Wasser und gegebenenfalls des Lösungsmittels ausgeführt, um eine gut homogensierte Mischung zu erhalten, und
2) dass eine Dekantation der in Schritt 2) erhaltenen Mischung in einen Behälter durchgeführt wird, der Wasser und eine niedrige Menge an wasserstoffperoxidhaltigem Wasser enthält, und
3) dass das saubere Material, das von verschmutzenden Schwerkohlenwasserstorfen befreit ist, vom Behälterboden und die aufschwimmenden, verschmutzenden Kohlenwasserstoffe mittels Abschöpfen zurückgewonnen werden, und
4) dass bevorzugt die feinen Sedimentteilchen abgetrennt werden und das Wasser, welches noch mit den verschmutzenden Schwerkohlenwasserstoffen der in Schritt 3) abgeschöpften aufschwimmenden Phase vermischt ist.

10. Verfahren gemäß einem der vorhergehenden Ansprüche, **dadurch gekennzeichnet, dass** eine Einrichtung verwendet wird, die transportabel ist und an einer verschmutzten Stelle oder in Nähe davon angebracht werden kann, die aufwärts zu bis abwärts umfasst:
a) einen Mischer (1), der eine geschlossene Einfassung und Mittel zum Rühren umfasst,
b) einen Speicherbehälter (2) einer Lösung von wasserstoffperoxidhaltigem Wasser, der den ersten Mischer (1) speist,
c) einen Separator/Dekanter (3), der ein offenes Becken umfasst, und
d) bevorzugt einen zweiten Speicherbehälter (4) einer wässrigen Lösung, die eine niedrige Menge an wasserstoffperoxidhaltigem Wasser enthält.

11. Verfahren gemäß Anspruch 10, **dadurch gekennzeichnet, dass** die Einrichtung des weiteren einen Speicherbehälter (6₂) des Lösungsmittels und bevorzugt eine Dosierpumpe umfasst, die es erlaubt, den ersten Mischer mit dem Lösungsmittel zu speisen.

12. Verfahren gemäß Anspruch 10, **dadurch gekennzeichnet, dass** die Einrichtung des weiteren einen Dreiweg-Dekanter (5) umfasst, der es erlaubt, die verschmutzenden Kohlenwasserstoffe, Wasser und die feinen Rest-Sedimentationsteilchen, die aus der aufschwimmenden Phase aus dem Separator/Dekanter (3) stammen, zu trennen.

13. Verfahren gemäß Anspruch 10 oder 11, **dadurch gekennzeichnet, dass** die Einrichtung des weiteren aufwärts einen Zerkleinerer (6₁) umfasst, der es erlaubt, das verschmutzte Material zu zerkleinern, bevorzugt in Form von Teilchen mit einer Größe von weniger als 5 mm.

14. Verfahren gemäß einem der Ansprüche 10 bis 13, **dadurch gekennzeichnet, dass** die Einrichtung des weiteren ein Beförderungsmittel (8) umfasst, das eine Förderschnecke aufweist, die es erlaubt, das verschmutzte Material in den ersten Mischer (1) zu befördern, und ein zweites Beförderungsmittel (10) umfasst, welches eine Förderschnecke aufweist, die es erlaubt, das verschmutzte Material vom Behälterboden des Separators/Dekanters (3) zu einem Zwischenspeichersilo des gereinigten Materials (11) zu befördern.

15. Verfahren gemäß einem der vorhergehenden Ansprüche, **dadurch gekennzeichnet, dass** das verschmutzte Material Strandsand ist, der durch Schwerkohlenwasserstorfe verschmutzt ist.
